# EUROPÄISCHE PATENTSCHRIFT

(11) **EP 2 506 098 B1**
(45) Veröffentlichungstag und Bekanntmachung des Hinweises auf die Patenterteilung: **02.03.2016**
(21) Anmeldenummer: 11160617.4
(22) Anmeldetag: 31.03.2011
(51) Int. Cl.: G05B 19/042

(54) **Anordnung und Verfahren für den Betrieb einer industriellen Automatisierungsanordnung mit einer Mehrzahl programmierbarer Automatisierungskomponenten und einer Mehrzahl Automatisierungsprogramme**
Assembly and method for operating an industrial automation assembly with a number of programmable automation components and a number of automation programmes
Agencement et procédé pour le fonctionnement d'un agencement d'automatisation industriel doté d'une multitude de composants d'automatisation programmables et d'une multitude de programmes d'automatisation

(43) Veröffentlichungstag der Anmeldung: 03.10.2012
(73) Patentinhaber: Siemens Aktiengesellschaft, 80333 München (DE)
(72) Erfinder: Ünver, Halil Caglar, 90402, Nürnberg (DE); Lomakin, Dimitri, 90411, Nürnberg (DE); Petty, Daniela, 91054, Erlangen (DE)

(56) Entgegenhaltungen:
- US-A1- 2008 208 361
- US-A1- 2008 215 846
- ANONYMOUS: "Industrial Control Solutions Guide", INTERNET CITATION, 26. Januar 2007 (2007-01-26), XP002475491, Gefunden im Internet: URL:http://www.archive.org/web/20070126043 519/http://rtcmagazine.com/pdfs /ICSGv3.pdf [gefunden am 2008-04-08]
- LINDERMEIER M: "Load management for distributed object-oriented environments", DISTRIBUTED OBJECTS AND APPLICATIONS, 2000. PROCEEDINGS. DOA '00. INTE RNATIONAL SYMPOSIUM ON 21-23 SEPTEMBER 2000, PISCATAWAY, NJ, USA,IEEE, 21. September 2000 (2000-09-21), Seiten 59-68, XP010514359, DOI: DOI:10.1109/DOA.2000.874176 ISBN: 978-0-7695-0819-1

## Beschreibung

Die Erfindung betrifft eine Automatisierungsanordnung mit einer Mehrzahl programmierbarer Automatisierungskomponenten gemäß dem Oberbegriff des Patentanspruchs 1, und ein Verfahren für den Betrieb einer Automatisierungsanordnung gemäß dem Oberbegriff des Patentanspruchs 11.

In industriellen Automatisierungsanordnungen werden unter anderem programmierbare Automatisierungskomponenten eingesetzt, welche häufig auch als "CPU" (Central Processing Unit), "PLC" (Programmable Logic Controller), "Controller" o.ä. bezeichnet werden. Häufig werden dafür proprietäre Rechnereinheiten verwendet, so dass die Software, also die Betriebssysteme und Automatisierungsprogramme, häufig ebenso proprietär sind. Dies gilt sowohl für die Automatisierungskomponenten verschiedener Hersteller, die nicht miteinander "kompatibel" sind, also auch für die verschiedenen Hardware-Plattformen ein- und desselben Herstellers, zwischen denen die Betriebs-systeme und Programme nicht ohne Weiteres austauschbar sind. Darüber hinaus läuft üblicher Weise auf einer einzigen programmierbaren Automatisierungskomponente immer genau ein Betriebssystem (oft auch als "Firmware" bezeichnet) und genau ein Automatisierungsprogramm. Dies liegt daran, dass durch die Automatisierungskomponenten oft Prozesse oder Fertigungsabläufe gesteuert werden, die eine "Echtzeitfähigkeit" verlangen bzw. für die die Einhaltung von Taktzeiten, Verfügbarkeiten etc. garantiert werden müssen.

Diese führt dazu, dass in den gebräuchlichen Automatisierungsanordnungen regelmäßig eine Vielzahl programmierbarer Automatisierungskomponenten zur gleichen Zeit eingesetzt werden, wobei diese sich durchaus hinsichtlich ihrer jeweiligen Leistungsfähigkeit (Rechenleistung, Speicher, Schnittstellen etc.) und Architektur (u.a. Ressourcen) unterschieden. Die Entscheidung darüber, welches Automatisierungsprogramm auf welcher Automatisierungskomponente ablaufen soll, wird bereits bei der Erstellung der Automatisierungsanordnung, dem sog. "Engineering", festgelegt. Eine nachträgliche Änderung dieser Zuordnung ist oft schwierig, weil Programme zum Ablauf auf einer anderen Automatisierungskomponente, als ursprünglich geplant, häufig neu kompiliert oder parametrisiert werden müssen.

Eine flexible Verteilung der Rechenlast und damit der Automatisierungsprogramme auf die verfügbaren Automatisierungskomponenten ist dadurch sehr schwierig.

Die Druckschrift US2008/0208361A1 - Grgic "Dynamic Load Balancing Using Virtual Controllers Instances" zeigt eine flexible Verteilung eine Last auf eine Anzahl als SoftwareInstanzen gebildeter Automatisierungskomponenten, die als "virtual controller" bezeichnet werden.

Die Veröffentlichung Lindermeier - "Load Management for Distributed Object-Oriented Environments" zeigt ebenfalls eine dynamische Lastverteilung, wobei hier komplexe Objekte der zur Laufzeit zwischen funktionsgleichen Laufzeitumgebungen transferiert werden.

Es ist also eine Aufgabe der vorliegenden Erfindung, eine Anordnung und ein Verfahren vorzuschlagen, womit die Verwaltung und die Zuordnung von Automatisierungsprogrammen zu Automatisierungskomponenten flexibel bewerkstelligt werden kann.

Es ist eine zentrale Idee der vorliegenden Erfindung, zur Lösung der Aufgabe das Prinzip des verteilten Rechnens ("Grid Computing", "Clustern", "Cloud Computing") in Automatisierungsanordnungen verfügbar zu machen, wobei die unterschiedlichen Eigenschaften der Hardware, Software u. Peripherie verschiedener programmierbarer Automatisierungskomponenten und unterschiedliche Anforderungen der verschiedenen Automatisierungsprogramme und unterschiedlichen Betriebssysteme bzw. "Firmwares" durch Virtualisierungstechniken (virtuelle Maschinen) derart aneinander angepasst werden, dass eine Migrierbarkeit der Automatisierungsprogramme in einem Netzwerk programmierbarer Automatisierungskomponenten, also einer verteilten Automatisierungsanordnung, erreicht wird.

Die Lösung der Aufgabe sieht insbesondere eine Automatisierungsanordnung gemäß Patentanspruch 1 und ein Verfahren für eine Automatisierungsanordnung gemäß dem Patentanspruch 11 vor.

Dabei wird eine Automatisierungsanordnung mit einer Mehrzahl programmierbarer Automatisierungskomponenten und einer Mehrzahl Automatisierungsprogramme vorgeschlagen, wobei jede der Automatisierungskomponenten eine Steuerungseinrichtung für die Bereitstellung und Verwaltung zumindest einer virtuellen Maschine umfasst, wobei jede der virtuellen Maschinen zur Ausführung eines Betriebssystems und zumindest eines Automatisierungsprogramms eingerichtet ist, wobei die Automatisierungsanordnung eine Verwaltungseinrichtung zur Konfiguration der virtuellen Maschinen umfasst, und wobei die Konfiguration die Installation auszuführender Automatisierungsprogramme auf den virtuellen Maschinen und die Kontrolle der virtuellen Maschinen und der darauf gespeicherten Automatisierungsprogramme umfasst. Die Verwaltungseinrichtung ist dabei zum Zugriff auf erste Informationen über die freien Ressourcen der verwalteten Automatisierungskomponenten und zum Zugriff auf zweite Informationen über die Anforderung zumindest eines auszuführenden Automatisierungsprogramms hinsichtlich der dafür benötigten Ressourcen eingerichtet, und die Verwaltungseinrichtung ist zur Verarbeitung der ersten und der zweiten Informationen für die Konfiguration eingerichtet. Durch die Einrichtung einer zentralen Verwaltungseinrichtung, die mit jeweils einer Steuerungseinrichtung der Automatisierungskomponenten zusammenwirkt, kann ein neu zu startendes Automatisierungsprogramm auf einer geeigneten der programmierbaren Automatisierungskomponenten zur Ausführung gebracht werden.

Die Aufgabe wird weiterhin durch ein Verfahren für den Betrieb einer Automatisierungsanordnung mit einer Mehrzahl programmierbarer Automatisierungskomponenten und einer Mehrzahl Automatisierungsprogrammen gelöst. Dabei umfasst jede der Automatisierungskomponenten eine Steuerungseinrichtung für die Bereitstellung und den Betrieb zumindest einer virtuellen Maschine, wobei jede der virtuellen Maschinen zur Ausführung eines Betriebssystems und zumindest eines Automatisierungsprogramms eingerichtet ist. Dabei wird eine Verwaltungseinrichtung zur Konfiguration der virtuellen Maschinen vorgesehen, wobei die Konfiguration die Installation auszuführender Automatisierungsprogramme auf den Automatisierungskomponenten und die Ablaufkontrolle der Automatisierungsprogramme umfasst, wobei die Verwaltungseinrichtung zu der Ausführung folgender Verfahrensschritte eingerichtet ist: Zugriff auf erste Informationen über die freien Ressourcen der verwalteten Automatisierungskomponenten, Zugriff auf zweite Informationen über Anforderungen zumindest eines auszuführenden Automatisierungsprogramms hinsichtlich der dafür benötigten Ressourcen, und Verarbeitung der ersten und der zweiten Informationen für die Konfiguration der Automatisierungskomponenten. Durch dieses Verfahren ist eine flexible und angepasste Verteilung auszuführender Automatisierungsprogramme und Prozesse auf eine Mehrzahl von Automatisierungskomponenten mit geeigneten freien oder freigebbaren Ressourcen möglich.

Vorteilhafte Ausgestaltungen der erfindungsgemäßen Automatisierungsanordnung sind in den abhängigen Patentansprüchen angegeben. Die dabei beschriebenen Merkmale und Vorteile gelten sinngemäß auch für das erfindungsgemäße Verfahren. Dies bedeutet, dass das erfindungsgemäße Verfahren solche Verfahrensschritte umfassen kann, die durch die beschriebenen Ausgestaltungen der Automatisierungsanordnung bewerkstelligt werden können.

Eine besondere Flexibilität ergibt sich, wenn zumindest eine der Automatisierungskomponenten zum simultanen Betrieb einer Mehrzahl virtueller Maschinen eingerichtet ist. Damit können freie Ressourcen solcher Automatisierungskomponenten, auf denen bereits ein erstes Automatisierungsprogramm abläuft, für ein weiteres Automatisierungsprogramm ausgenutzt werden. Zum einen ist es dabei möglich, für jedes der Automatisierungsprogramme eine eigene virtuelle Maschine zu starten und somit in einer eigenen "gekapselten" Umgebung ablaufen zu lassen. Es ist aber auch möglich, insbesondere bei sog. "unkritischen" Prozessen, mehrere Automatisierungsprogramme innerhalb einer einzigen virtuellen Maschine zum Ablauf zu bringen. Dabei kann vorteilhaft in den zweiten Informationen festgelegt sein, welche diesbezüglichen Anforderungen ein betrachtetes Automatisierungsprogramm aufweist.

Eine Anpassung der Architektur der Automatisierungsanordnung ist möglich, wenn die Verwaltungseinrichtung zum Verschieben eines Automatisierungsprogramms von einer ersten zu einer zweiten der Automatisierungskomponenten ausgebildet ist. Dies bedeutet, dass bei Änderungen in den Anforderungen, bei Änderungen hinsichtlich der auszuführenden Automatisierungsprogramme oder bei Änderungen hinsichtlich der zur Verfügung stehenden Automatisierungskomponenten oder Ressourcen nicht nur freie Ressourcen durch neu zu startende Automatisierungsprogramme verwendet werden können, sondern dass auch eine Optimierung der Zuordnung von Automatisierungsprogrammen zu den zur Verfügung stehenden Automatisierungskomponenten erfolgen kann. In einer vorteilhaften Ausgestaltung ist dies auch zur Laufzeit möglich. Dies ist beispielsweise dann der Fall, wenn die Verwaltungseinrichtung zur Vorbereitung der Außerbetriebnahme einer Automatisierungskomponente eingerichtet ist, wobei die Vorbereitung der Außerbetriebnahme die Verschiebung eines ablaufenden Automatisierungsprögramms von der abzuschaltenden Automatisierungskomponente zu einer anderen der Automatisierungskomponenten umfasst. Dazu ist die Verwaltungseinrichtung vorteilhaft zur Übertragung und zum Start einer Kopie des zu verschiebenden Automatisierungsprogramms zu der anderen Automatisierungskomponente eingerichtet, wobei die Beendigung des ursprünglich ablaufenden Automatisierungsprogramms auf der abzuschaltenden Automatisierungskomponente vorteilhaft erst im Zuge des Starts der Kopie des Automatisierungsprogramms auf der neuen Automatisierungskomponente erfolgt. Somit ist eine Verschiebung eines Automatisierungsprogramms im laufenden Betrieb möglich, wobei vorteilhaft auch eine Parametrierung des abzuschaltenden Automatisierungsprogramms auf das neu gestartete Automatisierungsprogramm, also die Kopie, übertragen wird. In einer vorteilhaften Ausgestaltung ist die Verwaltungseinrichtung zur Überwachung der Ausführung der Automatisierungsprogramme und/oder des Betriebszustands der Automatisierungskomponenten eingerichtet, wozu vorteilhaft jeweilige Informationen von den Steuerungseinrichtungen zu der Verwaltungseinrichtung übertragen werden. Dabei ist die Verwaltungseinrichtung vorteilhaft zur dynamischen Reaktion auf Änderungen eines Betriebszustands eines Automatisierungsprogramms und/oder einer Automatisierungskomponente eingerichtet, wobei jeweils im Sinne einer Optimierung die Zuordnung der Automatisierungsprogramme zu den Automatisierungskomponenten anhand der aktuellen Bedingungen neu festgelegt und umgesetzt wird und auch ein NeuStart gestörter Automatisierungsprogramme, ggf. auch auf einer anderen Automatisierungskomponente, möglich ist.

Die Verwaltungseinrichtung kann auf einer separaten Hardware-Komponente, beispielsweise einem Steuerungs-Computer, angeordnet sein und dort ablaufen. In einer vorteilhaften Ausgestaltung ist die Verwaltungseinrichtung selbst als ein Programm oder ein Programm-Paket zum Ablauf auf einer der Automatisierungskomponenten ausgestaltet, wobei sogar eine Realisierung als "verteilter Prozess" auf mehreren Automatisierungskomponenten oder mehreren Rechnern möglich ist. Insbesondere in der letztgenannten Variante kann die Verwaltungseinrichtung "redundant" ausgeführt sein, d.h., dass selbst beim Ausfall eines Steuerungs-Rechners oder Automatisierungskomponente die durch die Verwaltungseinrichtung gebildete Funktionalität aufrecht erhalten werden kann.

Eine wichtige vorteilhafte Aufgabe der Verwaltungseinrichtung besteht im Lastausgleich zwischen den Automatisierungskomponenten, wobei die Verwaltungseinrichtung derart eingerichtet ist, dass beispielsweise auf jeder der Automatisierungskomponenten eine Mindest-Reserve an freien Ressourcen (beispielsweise Rechenleistung, Arbeitsspeicher etc.) vorgehalten wird. Insbesondere kann dieser Lastausgleich auch Anforderungen hinsichtlich einer Redundanz erfüllen, so dass beispielsweise beim Ausfall einer der Automatisierungskomponenten nur eine begrenzte Anzahl kritischer Prozesse betroffen ist.

Die Verwaltungseinrichtung benötigt zur Erfüllung ihrer Aufgaben erste und zweite Informationen, wobei die ersten Informationen durch den Empfang und die Verarbeitung von Meldungen der Automatisierungskomponenten bzw. der dort angeordneten Steuerungseinrichtungen erstellt oder aktualisiert werden können, wobei diese Meldungen Informationen über freie und/oder verwendete der Ressourcen der jeweiligen Automatisierungskomponente betreffen. Alternativ oder zusätzlich kann die Verwaltungseinrichtung jedoch auch ein Register führen, wobei anhand von Angaben über die vorhandenen Ressourcen der jeweiligen Automatisierungskomponenten und anhand der Angaben über den Ressourcen-Bedarf der bereits zu diesen Automatisierungskomponenten übertragenen bzw. dort gestarteten Automatisierungsprogramme die jeweils freien bzw. verfügbaren Ressourcen errechnet werden können. Solche "theoretischen" Informationen über freie Ressourcen können hilfsweise durch regelmäßige Messungen, die durch die Steuerungseinrichtungen der jeweiligen Automatisierungskomponenten bereitgestellt werden, abgeglichen werden.

Ausführungsbeispiele der erfindungsgemäßen Automatisierungsanordnung werden nachfolgend anhand der Zeichnung erläutert.. Sie dienen gleichzeitig der Erläuterung eines Ausführungsbeispiels des erfindungsgemäßen Verfahrens. Die dabei beschriebenen vorteilhaften Ausgestaltungen können einzeln oder in beliebiger Kombination miteinander für die Automatisierungsanordnung und für das Verfahren verwendet werden.

Dabei zeigt die einzige Figur in schematischer Darstellung ein Netzwerk aus Automatisierungskomponenten und einer Verwaltungseinrichtung.

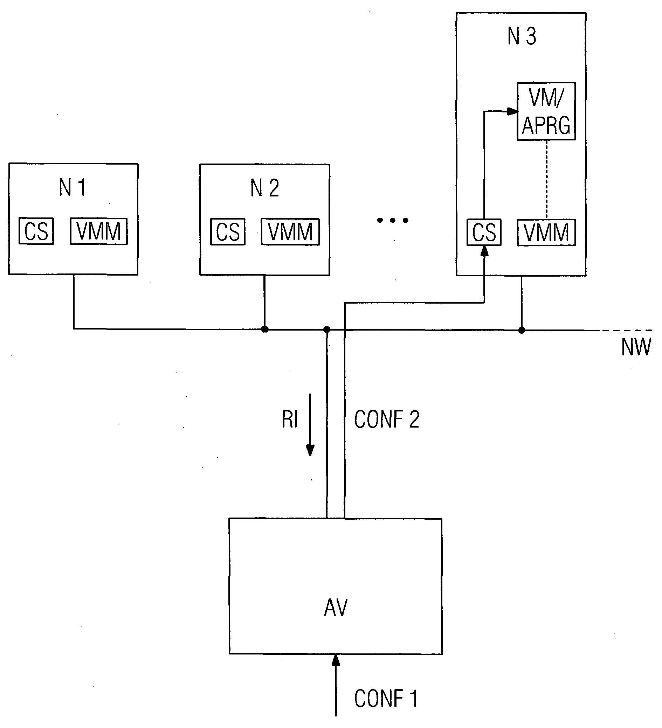

In der Figur 1 ist ein Netzwerk NW dargestellt, beispielsweise ein Profinet, Industrial Ethernet, Profibus-Netz o.ä., welches zum Austausch von Daten, insbesondere Programme und Meldungen, geeignet ist. An dem Netzwerk NW sind programmierbare Automatisierungskomponenten N1, N2, N3 ("Nodes") angeknüpft; zudem ist ein weiterer Rechner als Verwaltungseinrichtung AU ("Administration Unit") an dem Netzwerk NW angeschlossen. Bei den Automatisierungskomponenten N1, N2, N3 handelt es sich um mikroprozessorgesteuerte Controller (sog. PLC's); es können insbesondere jedoch auch Personal-Computer eingesetzt werden, die vorzugsweise mit einem echtzeitfähigen Betriebssystem oder mit einem Betriebssystem mit Echtzeit-Erweiterung versehen sind. An den Automatisierungskomponenten N1, N2, N3 sind (nicht dargestellt) Ein- und Ausgabeschnittstellen, sog. IO-Baugruppen, angeschlossen, an die wiederum Sensoren und Aktoren für die Kontrolle eines industriellen Prozesses, einer Automatisierungsaufgabe o.ä. angeschlossen sein können.

Die Verwaltungseinrichtung AU umfasst eine spezielle Software, die im Wesentlichen kommunikativ mit mehreren Instanzen einer Client-Software CS zusammenwirkt, wobei auf jeder der Automatisierungskomponenten N1, N2, N3 eine Instanz der Client-Software CS abläuft. Diese Instanzen müssen nicht notwendiger Weise identisch sein. Auf den Automatisierungskomponenten ist weiterhin jeweils eine Software VMM zur Virtualisierungskontrolle (VMM = Virtual Machine Monitor) installiert. Diese Programme stellen auf den Automatisierungskomponenten N1, N2, N3 gekapselte Laufzeitumgebungen, sog. virtuelle Maschinen, zur Verfügung. Diese Laufzeitumgebungen stellen die Hardware-Ressourcen der.Automatisierungskomponenten N1, N2, N3 derart einer oder mehreren Laufzeitumgebungen jeweils zur Verfügung, dass für jede der Laufzeitumgebungen und ein darin zu betreibendes Betriebssystem eine geeignete Laufzeitumgebung (Hardware, Software) virtuell bereitgestellt wird; die Software VMM ist also ein sog. "Hypervisor". Die Software VMM kann dabei durch die Client-Software CS gesteuert werden, wobei die Client-Software CS insbesondere das Erzeugen und Zerstören einer Laufzeitumgebung, das Installieren einer Firmwäre oder eines Betriebssystems innerhalb einer solchen Laufzeitumgebung und die Zuordnung von Ressourcen zu den Laufzeitumgebungen kontrollieren kann. Darüber hinaus kann die Client-Software CS das Laden, das Starten und das Beenden von Automatisierungsprogrammen in den Laufzeitumgebungen (virtuelle Maschinen) initiieren. In einer vorteilhaften Ausgestaltung kann die Client-Software CS jeweils auch die Verwendung (Auslastung) von tatsächlichen Ressourcen der Automatisierungskomponenten durch die virtuellen Maschinen bzw. den darauf ablaufenden Automatisierungsprogrammen und Betriebssystemen/Firmware-Instanzen statistisch erfassen und mittels Meldungen RI (Ressource Information) der Verwaltungseinrichtung AU melden. Umgekehrt kann die Verwaltungseinrichtung AU über Steuerungsmeldungen CONF2 Anweisungen an die Client-Software CS jeder Automatisierungskomponente N1, N2, N3 übermitteln. Diese Steuerungsmeldungen CONF2 betreffen hauptsächlich das Erzeugen und Zerstören von Laufzeitumgebungen und das Laden und Ausführen von Automatisierungsprogrammen APRG innerhalb der virtuellen Maschinen VM. Die Automatisierungsprogramme APRG können entweder im Zuge der Meldungen CONF2 von der Verwaltungseinrichtung AU zu dem jeweiligen Knoten übertragen werden, oder aber aus einer anderen Quelle geladen werden. Insbesondere ist es auch möglich, dass eine Auswahl von Automatisierungsprogrammen APRG bereits in einer Mehrzahl der Automatisierungskomponenten N1, N2, N3 jeweils gespeichert ist, beispielsweise auf einer Festplatte.

Die Verwaltungseinrichtung AU verfügt über Zugriff auf eine Datenbank oder einen Datenspeicher, in dem als erste Informationen Daten über die verfügbaren (freien) Ressourcen der einzelnen Automatisierungskomponenten N1, N2, N3 abgelegt sind. Diese ersten Informationen werden regelmäßig mittels Meldungen RI aktualisiert. Neben dem aktuellen Stand der Ausnutzung/Belegung von Ressourcen ist daher auch eine statistische Auswertung möglich, die insbesondere auch den Ressourcenbedarf einzelner Automatisierungsprogramme APRG aus vergangenen Nutzungsperioden der jeweiligen Automatisierungsprogramme APRG betrifft.

Im Folgenden soll nun der Fall betrachtet werden, dass eine neue Software, also ein zukünftig auszuführendes Automatisierungsprogramm, in der Automatisierungsanordnung gestartet werden soll. Dazu ergeht durch eine externe (nicht dargestellte) Verwaltungseinheit, beispielsweise ein MES-System (MES = Manufacturing Execution System) oder ein SCADA-System (SCADA = Supervisory Control and Data Aquisition) oder durch eine Nutzereingabe eine entsprechende Anfrage oder ein entsprechender Auftrag CONF1 an die Verwaltungseinrichtung AU. In einer ersten Ausgestaltung kann die Meldung oder der Auftrag CONF1 auch den prognostizierten Ressourcenbedarf (beispielsweise Speicherbedarf, Anzahl der benötigten Taktzyklen, pro Sekunde, Zugriffszeit auf Kommunikationseinrichtungen etc.) enthalten. Diese Angaben, die also die Identität des zu startenden Automatisierungsprogramms APRG, das dafür notwendige Betriebssystem, die benötigten Ressourcen etc. betreffen, werden auch als zweite Informationen bezeichnet. Dabei können, wie bereits ausgeführt, auch schon seitens der Verwaltungseinrichtung AU Daten über den Ressourcenbedarf gespeichert sein, insbesondere als "Erfahrungswerte" aus vorangegangenen Nutzungen des betreffenden Automatisierungsprogramms APRG. Darüber hinaus können auch Daten über den "Eigenbedarf" an Ressourcen vorliegen, die durch die Bereitstellung der virtuellen Maschinen VM und den Ablauf der darin aktiven Betriebssysteme selbst benötigt werden. Auch dies sind zweite Informationen, die den Ressourcenbedarf für den Betrieb des neu zu startenden Automatisierungsprogramms APRG betreffen.

Die Verwaltungseinrichtung AU hat also Zugriff auf jeweilige erste Informationen über alle verwaltete Automatisierungskomponenten N1, N2, N3, sowie zweite Informationen über das zukünftig auszuführende Automatisierungsprogramm APRG. Durch einen Vergleich aller dieser Informationen (erste Informationen, zweite Informationen) wird nun die bestgeeignete Automatisierungskomponente ermittelt. In Bezug auf die Figur wird angenommen, dass die Automatisierungskomponente N3 für jede Ressourcen-Art (beispielsweise Speicher, Rechenleistung etc.) Ressourcen in ausreichender Menge bereitstellen kann. Somit wird die Verwaltungseinrichtung AU eine Meldung CONF2 oder besser gesagt ein ganzes Bündel an Meldungen CONF2 mit Befehlen zu der auf der Automatisierungskomponente N3 angeordneten Client-Software CS übermitteln. Diese gibt weitere Befehle an die Software VMM der Automatisierungskomponente N3, die eine entsprechende Laufzeitumgebung in einem freien Speicherbereich erstellt und dafür sorgt, dass dort ein passendes Betriebssystem zum Ablauf des Automatisierungsprogramms APRG geladen wird. Außerdem werden durch die Software VMM der Laufzeitumgebung und damit dem dort installierten Betriebssystem im erforderlichen Umfang Ressourcen der Automatisierungskömponente N3 zugeteilt, so dass auch eine bestimmte proprietäre Hardware emuliert werden kann. Danach wird das Automatisierungsprogramm APRG aus einer Datenquelle (Festplatte der Automatisierungskomponente N3, Netzwerk-Server, Verwaltungseinrichtung AU o.ä.) in die Laufzeitumgebung übertragen und zur Ausführung gebracht. Der Befehl, ob und wann das Automatisierungsprogramm APRG gestartet werden soll, kann dabei separat von der Verwaltungseinrichtung AU durch einen Befehl CONF2 übermittelt werden; die Client-Software CS kann jedoch auch so eingestellt sein, dass das Automatisierungsprogramm APRG automatisch und schnellstmöglich gestartet wird.

Je nach Auslastung der Automatisierungskomponenten N1, N2, N3 kann es vorkommen, dass auf keiner der Automatisierungskomponenten N1, N2, N3 Ressourcen in ausreichender Menge und jedes erforderlichen Typs zur Verfügung stehen. Dann ist es sinnvoll, die auf allen Automatisierungskomponenten N1, N2, N3 bereits ablaufenden Automatisierungsprogramme APRG, die installierten Laufzeitumgebungen und Betriebssysteme jeweils hinsichtlich ihres Bedarfs an Ressourcen zu überprüfen und derart neu auf die verfügbaren Ressourcen bzw. die Ressourcen der Automatisierungskomponenten N1, N2, N3 neu zu verteilen, dass das neu auszuführende Automatisierungsprogramm und das dafür erforderliche Betriebssystem auf einer der Automatisierungskomponenten N1, N2, N3 ausführbar ist. Dazu ist es möglich, einen laufenden Prozess, also ein ablaufendes Automatisierungsprogramm, von einer ersten Automatisierungskomponente zu einer anderen Automatisierungskomponente zu übertragen. Je nach Echtzeitanforderungen, die in den zweiten Informationen über die Automatisierungsprogramme niedergelegt sein können, kann es dazu erforderlich sein, zunächst eine Kopie des zu verschiebenden Automatisierungsprogramm auf eine andere Automatisierungskomponente wie beschrieben in Betrieb zu nehmen, danach Parameter, die beispielsweise Betriebszustände betreffen, von dem zuerst laufenden Automatisierungsprogramm zu der Kopie zu übertragen und damit die ablaufende Kopie des Automatisierungsprogramms zu parametrieren, um danach möglichst ohne signifikante Betriebsunterbrechung die Kontrolle eines Prozesses oder einer Fertigung etc. an die Kopie zu übertragen, wonach das ursprüngliche Automatisierungsprogramm gestoppt werden kann, deinstalliert werden kann und schließlich die Laufzeitumgebung entweder aufgegeben werden kann, oder für neue Zwecke benutzt werden kann. Mittels dieses Verfahrens werden so lange laufende Prozesse verschoben, bis eine ausreichend leistungsfähige Laufzeitumgebung und zugehörige Ressourcen für die Ausführung des "neuen" Automatisierungsprogramms auf einer einzigen Hardware-Plattform bereitgestellt werden kann.

Ein ähnliches Verschieben von Automatisierungsprogrammen und der dazu gehörigen Laufzeitumgebungen kann erforderlich sein, wenn eine der Automatisierungskomponenten N1, N2, N3 abgeschaltet werden soll.

Die jeweilige Client-Software CS kann zur Überwachung der jeweiligen Automatisierungskomponente N1, N2, N3 bzw. zur Überwachung der darauf ablaufenden Betriebssysteme oder Automatisierungsprogramme APRG eingesetzt werden. Dazu können beispielsweise laufend Meldungen ("Keep-Alive-Messages") zu der Verwaltungseinrichtung AU übertragen werden. Damit kann zum einen, wie bereits erwähnt, der Bedarf an Ressourcen der einzelnen Automatisierungsprogramme APRG statistisch erfasst werden. Zum anderen kann damit festgestellt werden, ob in einer Laufzeitumgebung VM oder in einer kompletten Automatisierungskomponente N1, N2, N3 ein Problem aufgetreten ist, beispielsweise ein Programmabsturz oder ein Systemversagen. In einem solchen Fall kann die Verwaltungseinrichtung AU die problematischen bzw. gestörten Automatisierungsprogramme APRG entweder auf der entsprechenden bisherigen Automatisierungskomponente N1, N2, N3 oder auf einer anderen, nicht gestörten Automatisierungskomponente N1, N2, N3 neu starten. Dazu ist es vorteilhaft, wenn die Verwaltungseinrichtung AU nicht nur eine Datenbank oder Liste über die Automatisierungsprogramme APRG der einzelnen Automatisierungskomponenten N1, N2, N3 führt, sondern auch in regelmäßigen Abständen eine Sicherung der Betriebsparameter ("Snapshot" der Variablen) der jeweiligen Automatisierungsprogramme APRG speichert.

Zur Kontrolle der bzw. Überwachung der Automatisierungsprogramme APRG kann die jeweilige Client-Software CS spezifische Aufgaben erfüllen, beispielsweise Timer ausführen, Überwachungsprogramme ("Watch Dog") ausführen, Compiler-Funktionen umfassen, Kommunikationsaufgaben erfüllen, Programme starten und stoppen etc.

Im Gegensatz zu der Anwendungsvariante, bei der die Abschaltung einer Automatisierungskomponente N1, N2, N3 vorbereitet und durchgeführt werden kann, kann umgekehrt natürlich auch eine weitere Automatisierungskomponente dem Netzwerk NW zugefügt werden. Die damit verfügbaren Personen können entweder einem Datenbankeintrag entnommen werden, oder mittels einer Meldung CONF1 der Verwaltungseinrichtung AU bekannt gemacht werden, oder aber von der neuen Kommunikationskomponente selbst mittels einer Meldung RI der Verwaltungseinrichtung AU übermittelt werden. Danach kann automatisch oder gesteuert durch einen Befehl ein sog. "Load Balancing" durchgeführt werden, wobei die im gesamten Netzwerk NW bzw. der ganzen Automatisierungsanordnung abzuarbeitenden Automatisierungsprogramme APRG beispielsweise gleichmäßig über die verfügbaren Automatisierungskomponenten verteilt werden. Dabei können auch Sicherheitsanforderungen, beispielsweise dass nicht mehrere kritische Prozesse auf ein- und derselben Automatisierungskomponente ablaufen sollen, berücksichtigt werden.

## Patentansprüche

1. Automatisierungsanordnung mit einer Mehrzahl programmierbarer Automatisierungskomponenten (N1, N2, N3) und einer Mehrzahl Automatisierungsprogramme (APRG),
**dadurch gekennzeichnet, dass**
- jede der Automatisierungskomponenten (N1, N2, N3) eine Steuerungseinrichtung (CS) für die Bereitstellung und Verwaltung zumindest einer virtuellen Maschine (VM) umfasst, wobei jede der virtuellen Maschinen (VM) zur Ausführung eines Betriebssystems und zumindest eines Automatisierungsprogramms (APRG) eingerichtet ist,
- die Automatisierungsanordnung eine Verwaltungseinrichtung (AU) zur Konfiguration der virtuellen Maschinen (VM) umfasst, wobei die Konfiguration die Installation auszuführender Automatisierungsprogramme (APRG) auf den virtuellen Maschinen (VM) und die Kontrolle der virtuellen Maschinen (VM) und der darauf gespeicherten Automatisierungsprogramme (APRG) umfasst,
- die Verwaltungseinrichtung (AU) zum Zugriff auf erste Informationen über die freien Ressourcen der verwalteten Automatisierungskomponenten (N1, N2, N3) und zum Zugriff auf zweite Informationen über die Anforderung zumindest eines auszuführenden Automatisierungsprogramms (APRG) hinsichtlich der dafür benötigten Ressourcen eingerichtet ist, und
- die Verwaltungseinrichtung (AU) zur Verarbeitung der ersten und der zweiten Informationen für die Konfiguration der virtuellen Maschinen (VM) eingerichtet ist, wobei die Konfiguration die Erzeugung einer Laufzeitumgebung in einem freien Speicherbereich zur Emulgierung einer proprietären Hardware, die Installation eines passenden Betriebssystems und die Installation des auszuführenden Automatisierungsprogramms (APRG) auf den virtuellen Maschinen (VM) umfasst.

2. Automatisierungsanordnung nach Patentanspruch 1,
**dadurch gekennzeichnet,**
**dass** die Verwaltungseinrichtung (AU) derart ausgestaltet ist,
**dass** bei der Verarbeitung der ersten und der zweiten Informationen eine solche der Automatisierungskomponenten (N1, N2, N3) für den Betrieb des auszuführenden Automatisierungsprogramms (APRG) ausgewählt wird, deren freie oder freigebbare Ressourcen die Anforderungen des Automatisierungsprogramms (APRG) erfüllen.

3. Automatisierungsanordnung nach einem der vorhergehenden Patentansprüche,
**dadurch gekennzeichnet,**
**dass** zumindest eine der Automatisierungskomponenten (N1, N2, N3) zum simultanen Betrieb einer Mehrzahl virtueller Maschinen (VM) eingerichtet ist.

4. Automatisierungsanordnung nach einem der vorhergehenden Patentansprüche,
**dadurch gekennzeichnet,**
**dass** die Verwaltungseinrichtung (AU) zum Verschieben eines Automatisierungsprogramms (APRG) von einer ersten zu einer zweiten der Automatisierungskomponenten (N1, N2, N3) ausgebildet ist.

5. Automatisierungsanordnung nach Patentanspruch 4,
**dadurch gekennzeichnet,**
**dass** die Verwaltungseinrichtung (AU) zur Vorbereitung der Außerbetriebnahme einer der Automatisierungskomponenten (N1, N2, N3) eingerichtet ist, wobei die Vorbereitung die Verschiebung eines ablaufenden Autömatisierungsprogramms (APRG) von der abzuschaltenden Automatisierungskomponente zu einer anderen der Automatisierungskomponenten (N1, N2, N3) umfasst.

6. Automatisierungsanordnung nach Patentanspruch 5,
**dadurch gekennzeichnet,**
**dass** die Verwaltungseinrichtung (AU) zur Übertragung und zum Start einer Kopie des zu verschiebenden Automatisierungsprogramms (APRG) zu der anderen Automatisierungskomponente eingerichtet ist, wobei die Beendigung des Automatisierungsprogramms (APRG) auf der abzuschaltenden Automatisierungskomponente erst im Zuge des Starts der Kopie des Automatisierungsprogramms (APRG) auf der anderen Automatisierungskomponente erfolgt.

7. Automatisierungsanordnung nach einem der vorhergehenden Patentansprüche,
**dadurch gekennzeichnet,**
**dass** die Verwaltungseinrichtung (AU) zur Überwachung der Ausführung der Automatisierungsprogramme (APRG) und/oder des Betriebs der Automatisierungskomponenten (N1, N2, N3) eingerichtet ist,
wobei die Verwaltungseinrichtung (AU) zur dynamischen Reaktion auf Änderungen eines Betriebszustands eines Automatisierungsprogramms (APRG) und/oder einer Automatisierungskomponente eingerichtet ist.

8. Automatisierungsanordnung nach einem der vorhergehenden Patentansprüche,
**dadurch gekennzeichnet,**
**dass** die Verwaltungseinrichtung (AU) als ein Programm oder einer Programm-Paket zum Ablauf auf einer der Automatisierungskomponenten (N1, N2, N3) ausgestaltet ist.

9. Automatisierungsanordnüng nach einem der vorhergehenden Patentansprüche,
**dadurch gekennzeichnet,**
**dass** die Verwaltungseinrichtung (AU) zum Lastausgleich zwischen den Automatisierungskomponenten (N1, N2, N3) eingerichtet ist.

10. Automatisierungsanordnung nach einem der vorhergehenden Patentansprüche,
**dadurch gekennzeichnet,**
**dass** die Verwaltungseinrichtung (AU) zum Empfang und zur Verarbeitung von Meldungen der Automatisierungskomponenten (N1, N2, N3) eingerichtet ist, wobei die Meldungen Informationen über freie und/oder verwendete der Ressourcen der Automatisierungskompononten (N1, N2, N3) betreffen.

11. Verfahren für den Betrieb einer Automatisierungsanordnung mit einer Mehrzahl programmierbarer Automatisierungskomponenten (N1, N2, N3) und einer Mehrzahl Automatisierungsprogramme (APRG),
**dadurch gekennzeichnet,**
**dass** jede der Automatisierungskomponenten (N1, N2, N3) eine Steuerungseinrichtung (CS) für die Bereitstellung und den Betrieb zumindest einer virtuellen Maschine (VM) umfasst,
wobei jede der virtuellen Maschinen (VM) zur Ausführung eines Betriebssystems und zumindest eines Automatisierungsprogramms (APRG) eingerichtet ist,
**dass** eine Verwaltungseinrichtung (AU) zur Konfiguration der virtuellen Maschinen (VM) vorgesehen wird, wobei die Konfiguration die Installation auszuführende kutomatisierungsprögramme (APRG) auf den Automatisierungskomponenten (N1, N2, N3) und die Ablaufkontrolle der Automatisierungsprogramme (APRG) umfasst,
wobei die Verwaltungseinrichtung (AU) zu der Ausführung folgender Verfahrensschritte eingerichtet ist:
- Zugriff auf erste Informationen über die freien Ressourcen der verwalteten Automatisierungskomponenten (N1, N2, N3),
- Zugriff auf zweite Informationen über Anforderungen zumindest eines auszuführenden Automatisierungsprogramms (APRG) hinsichtlich der dafür benötigten Ressourcen, und
- Verarbeitung der ersten und der zweiten Informationen für die Konfiguration der virtuellen Maschinen (VM),
wobei in einem freien Speicherbereich eine Laufzeitumgebung zur Emulierung einer proprietäre Hardware mit einem passenden Betriebssystem erzeugt und das auszuführende Automatisierungsprogramm (APRG) auf der virtuellen Maschine (VM) installiert wird.

## Claims

1. Automation arrangement having a plurality of programmable automation components (N1, N2, N3) and a plurality of automation programs (APRG),
**characterized in that**
- each of the automation components (N1, N2, N3) comprises a control device (CS) for providing and managing at least one virtual machine (VM), each of the virtual machines (VM) being set up to execute an operating system and at least one automation program (APRG),
- the automation arrangement comprises a management device (AU) for configuring the virtual machines (VM), the configuration comprising the installation of automation programs (APRG) to be executed on the virtual machines (VM) and the monitoring of the virtual machines (VM) and the automation programs (APRG) stored thereon,
- the management device (AU) is set up to access first information relating to the free resources of the managed automation components (N1, N2, N3) and to access second information relating to the requirement of at least one automation program (APRG) to be executed with respect to the resources required for this purpose, and
- the management device (AU) is set up to process the first and second information for configuring the virtual machines (VM),
the configuration comprising the generation of a runtime environment in a free memory area for emulating proprietary hardware, the installation of a suitable operating system and the installation of the automation program (APRG) to be executed on the virtual machines (VM).

2. Automation arrangement according to Patent Claim 1,
**characterized**
**in that** the management device (AU) is configured in such a manner that, during the processing of the first and second information, such a one of the automation components (N1, N2, N3) whose free or releasable resources meet the requirements of the automation program (APRG) is selected to operate the automation program (APRG) to be executed.

3. Automation arrangement according to one of the preceding patent claims,
**characterized**
**in that** at least one of the automation components (N1, N2, N3) is set up to simultaneously operate a plurality of virtual machines (VM).

4. Automation arrangement according to one of the preceding patent claims,
**characterized**
**in that** the management device (AU) is designed to shift an automation program (APRG) from a first to a second of the automation components (N1, N2, N3).

5. Automation arrangement according to Patent Claim 4,
**characterized**
**in that** the management device (AU) is set up to prepare for the decommissioning of one of the automation components (N1, N2, N3), the preparation comprising the shifting of a running automation program (APRG) from the automation component to be switched off to another of the automation components (N1, N2, N3) .

6. Automation arrangement according to Patent Claim 5,
**characterized**
**in that** the management device (AU) is set up to transmit and start a copy of the automation program (APRG) to be shifted to the other automation component, the automation program (APRG) on the automation component to be switched off being terminated only during the starting of the copy of the automation program (APRG) on the other automation component.

7. Automation arrangement according to one of the preceding patent claims,
**characterized**
**in that** the management device (AU) is set up to monitor the execution of the automation programs (APRG) and/or the operation of the automation components (N1, N2, N3),
the management device (AU) being set up to dynamically react to changes in an operating state of an automation program (APRG) and/or an automation component.

8. Automation arrangement according to one of the preceding patent claims,
**characterized**
**in that** the management device (AU) is in the form of a program or a program package for running on one of the automation components (N1, N2, N3).

9. Automation arrangement according to one of the preceding patent claims,
**characterized**
**in that** the management device (AU) is set up for load balancing between the automation components (N1, N2, N3).

10. Automation arrangement according to one of the preceding patent claims,
**characterized**
**in that** the management device (AU) is set up to receive and process messages from the automation components (N1, N2, N3), the messages relating to information regarding free and/or used resources of the automation components (N1, N2, N3).

11. Method for operating an automation arrangement having a plurality of programmable automation components (N1, N2, N3) and a plurality of automation programs (APRG),
**characterized**
**in that** each of the automation components (N1, N2, N3) comprises a control device (CS) for providing and operating at least one virtual machine (VM), each of the virtual machines (VM) being set up to execute an operating system and at least one automation program (APRG),
**in that** a management device (AU) for configuring the virtual machines (VM) is provided, the configuration comprising the installation of automation programs (APRG) to be executed on the automation components (N1, N2, N3) and the sequence monitoring of the automation programs (APRG),
the management device (AU) being set up to carry out the following method steps:
- access first information relating to the free resources of the managed automation components (N1, N2, N3),
- access second information relating to requirements of at least one automation program (APRG) to be executed with respect to the resources required for this purpose, and
- process the first and second information for configuring the virtual machines (VM),
a runtime environment being generated in a free memory area for emulating proprietary hardware with a suitable operating system, and the automation program (APRG) to be executed being installed on the virtual machines (VM).

## Revendications

1. Agencement d'automatisation ayant une pluralité de composants (N1, N2, N3) d'automatisation programmables et une pluralité de programmes (APRG) d'automatisation, **caractérisé en ce que**
- chacun des composants (N1, N2, N3) d'automatisation comprend un dispositif (CS) de commande pour la mise à disposition et la gestion d'au moins une machine (VM) virtuelle, chacune des machines (VM) virtuelles étant conçue pour la réalisation d'un système de fonctionnement et d'au moins un programme (APRG) d'automatisation,
- l'agencement d'automatisation comprend un dispositif (AU) de gestion pour la configuration des machines (VM) virtuelles, la configuration comprenant l'installation de programmes (APRG) d'automatisation à exécuter sur les machines (VM) virtuelles et le contrôle des machines (VM) virtuelles et des programmes (APRG) d'automatisation qui y sont mémorisés,
- le dispositif (AU) de gestion étant conçu pour l'accès à des premières informations sur les ressources libres des composants (N1, N2, N3) d'automatisation gérés et pour l'accès à des deuxièmes informations sur la demande d'au moins un programme (APRG) d'automatisation à exécuter en ce qui concerne les ressources nécessaires à cet effet, et
- le dispositif (AU) de gestion est conçu pour le traitement des premières et des deuxièmes informations pour la configuration des machines (VM) virtuelles, la configuration comprenant la production d'un environnement de temps d'exploitation dans une partie libre de la mémoire pour l'émulation d'un matériel propriétaire, l'installation d'un système de fonctionnement adapté et l'installation du programme (APRG) d'automatisation à exécuter sur les machines (VM) virtuelles.

2. Agencement d'automatisation suivant la revendication 1,
**caractérisé**
**en ce que** le dispositif (AU) de gestion est conformé de manière à sélectionner, lors du traitement des premières et des deuxièmes informations, celui des composants (N1, N2, N3) d'automatisation pour le fonctionnement du programme (APRG) d'automatisation à exécuter, dont les ressources libres ou pouvant être libérées satisfont les demandes du programme (APRG) d'automatisation.

3. Agencement d'automatisation suivant l'une des revendications précédentes,
**caractérisé**
**en ce qu'**au moins l'un des composants (N1, N2, N3) d'automatisation est conçu pour le fonctionnement simultané d'une pluralité de machines (VM) virtuelles.

4. Agencement d'automatisation suivant l'une des revendications précédentes,
**caractérisé**
**en ce que** le dispositif (AU) de gestion est constitué pour le passage d'un programme (APRG) d'automatisation d'un premier à d'un deuxième des composants (N1, N2, N3) d'automatisation.

5. Agencement d'automatisation suivant la revendication 4,
**caractérisé**
**en ce que** le dispositif (AU) de gestion est conçu pour la préparation de la mise hors service de l'un des composants (N1, N2, N3) d'automatisation, la préparation comprenant le passage d'un programme (APRG) d'automatisation, qui se déroule, du composant d'automatisation à déconnecter à un autre des composants (N1, N2, N3) d'automatisation.

6. Agencement d'automatisation suivant la revendication 5,
**caractérisé**
**en ce que** le dispositif (AU) de gestion est conçu pour la transmission et le début d'une copie du programme (APRG) d'automatisation à faire passer à l'autre composant d'automatisation, l'arrêt du programme (APRG) d'automatisation sur le composant d'automatisation à déconnecter ne s'effectuant qu'au cours du début de la copie du programme (APRG) d'automatisation sur l'autre composant d'automatisation.

7. Agencement d'automatisation suivant l'une des revendications précédentes,
**caractérisé**
**en ce que** le dispositif (AU) de gestion est conçu pour le contrôle de l'exécution du programme (APRG) d'automatisation et/ou du fonctionnement du composant (N1, N2, N3) d'automatisation,
le dispositif (AU) de gestion étant conçu pour réagir dynamiquement à des modifications de l'état de fonctionnement d'un programme (APRG) et/ou d'un composant d'automatisation.

8. Agencement d'automatisation suivant l'une des revendications précédentes,
**caractérisé**
**en ce que** le dispositif (AU) de gestion est sous la forme d'un programme ou d'un paquet de programmes conformés pour le déroulement sur l'un des composants (N1, N2, N3) d'automatisation.

9. Agencement d'automatisation suivant l'une des revendications précédentes,
**caractérisé**
**en ce que** le dispositif (AU) de gestion est conçu pour la compensation de charge entre les composants (N1, N2, N3) d'automatisation.

10. agencement d'automatisation suivant l'une des revendications précédentes,
**caractérisé**
**en ce que** le dispositif (AU) de gestion est conçu pour la réception et le traitement de messages des composants (N1, N2, N3) d'automatisation, les messages concernant des informations sur les ressources libres et/ou utilisées des composants (N1, N2, N3) d'automatisation.

11. Procédé pour faire fonctionner un agencement d'automatisation ayant une pluralité de composants (N1, N2, N3) d'automatisation programmables et une pluralité de programmes (APRG) d'automatisation,
**caractérisé**
**en ce que** chacun des composants (N1, N2, N3) d'automatisation comprend un dispositif (CS) de commande pour la mise à disposition et la gestion d'au moins une machine (VM) virtuelle, chacune des machines (VM) virtuelles étant conçue pour la réalisation d'un système de fonctionnement et d'au moins un programme (APRG) d'automatisation,
**en ce qu'**il est prévu un dispositif (AU) de gestion pour la configuration des machines (VM) virtuelles, la configuration comprenant
l'installation de programmes (APRG) d'automatisation à exécuter sur les composants (N1, N2, N3) d'automatisation et le contrôle du déroulement des programmes (APRD) d'automatisation, le dispositif (AU) de gestion étant conçu pour la réalisation des stades de procédé suivant :
- accès à des premières informations sur les ressources libres des composants (N1, N2, N3) d'automatisation gérés,
- accès à des deuxièmes informations sur des exigences d'au moins un programme à (APRG) d'automatisation à exécuter en ce qui concerne les ressources nécessaires à cet effet et,
- traitement des premières et des deuxièmes informations pour la configuration des machines (VM) virtuelles,
dans lequel, dans une partie libre de la mémoire, on produit un environnement de temps d'exploitation pour l'émulation d'un matériel propriétaire avec un système de fonctionnement adapté et on installe le programme (APRG) d'automatisation à exécuter sur la machine (VM) virtuelle.
